# EUROPÄISCHE PATENTANMELDUNG

(11) **EP 2 346 150 A1**
(43) Veröffentlichungstag der Anmeldung: **20.07.2011**
(21) Anmeldenummer: 10150728.3
(22) Anmeldetag: 14.01.2010
(51) Int. Cl.: H02M 5/22

(54) **Modulare Spannungsversorgungsanordnung, insbesondere für Reaktoren zur Herstellung von Polysilicium**

(71) Anmelder: AEG Power Solutions B.V., 1161 AH Zwanenburg (NL)
(72) Erfinder: Wallmeier, Peter, Dr., 59556 Lippstadt (DE)
(74) Vertreter: Graefe, Jörg

(57) **Zusammenfassung**

Die Erfindung betrifft eine Stromversorgungsanordnung, insbesondere für Reaktoren zur Herstellung von Polysilicium mit einer zentralen Steuerungseinheit und wenigstens einer Basisversorgungseinheit, wobei
- die Steuerungseinheit wenigstens ein Regel- und Steuermittel zum Regeln und/oder Steuern der Basisversorgungseinheit aufweist,
- die Basisversorgungseinheit
- wenigstens einen Eingang zur Versorgung des Basisversorgungsmoduls mit elektrischer Energie,
- wenigstens einen Ausgang zur Verbindung mit einer Gruppe von Lasten, die über die Basisversorgungseinheit mit aus dem Versorgungsnetz entnommener elektrischer Energie versorgbar sind, und
- steuerbare Schalter, vorzugsweise Thyristoren aufweist, die zumindest mittelbar mit dem Eingang und zumindest mittelbar mit dem Ausgang verbunden sind und mit denen die über den Ausgang den Lasten zuführbare Energie einstellbar ist, wobei die Schalter durch die Steuerungseinheit steuerbar sind,

wobei die Steuerungseinheit ein Steuerungsmodul und die Basisversorgungseinheit ein Basisversorgungsmodul ist,
das Steuerungsmodul einen Eingang zur Verbindung mit dem Versorgungsnetz zur Versorgung des Steuerungsmoduls mit elektrischer Energie aufweist,
die Stromsversorgungsanordnung einen Kommunikationsbus aufweist und
dass sowohl das Steuerungsmodul als auch das Basisversorgungsmodul eine Schnittstelle aufweisen, über die sie mit dem Kommunikationsbus verbunden sind.

## Beschreibung

Die vorliegende Erfindung betrifft eine Stromversorgungsanordnung, insbesondere für Reaktoren zur Herstellung von Polysilicium mit einer Steuerungseinheit und wenigstens einer Basisversorgungseinheit, wobei
- die Steuerungseinheit wenigstens ein Regel- und Steuermittel zum Regeln und/oder Steuern der Basisversorgungseinheit aufweist,
- die Basisversorgungseinheit
   o wenigstens einen Eingang zur Verbindung mit einem Versorgungsnetz zur Versorgung mit elektrischer Energie,
   o wenigstens einen Ausgang zur Verbindung mit einer Gruppe von Lasten, die über die Basisversorgungseinheit mit aus dem Versorgungsnetz entnommener elektrischer Energie versorgbar sind, und
   o steuerbare Schalter, vorzugsweise Thyristoren aufweist, die zumindest mittelbar mit dem Eingang und zumindest mittelbar mit dem Ausgang verbunden sind und mit denen die über den Ausgang den Lasten zuführbare Energie einstellbar ist, wobei die Schalter durch die Steuerungseinheit steuerbar sind.

Eine derartige Stromversorgungsanordnung ist beispielsweise aus der Druckschrift DE 20 2004 014 812 U1 bekannt. Die Gebrauchsmusterschrift offenbart eine Stromversorgungsanordnung mit einer Basisversorgungseinheit, mit welcher die an die Stromversorgungsanordnung in Reihe angeschlossenen Lasten in einem Dauerbetrieb mit elektrischer Spannung versorgt werden können. Ein Teil der Lasten kann parallel aus einer Mittelspannungsversorgungseinheit mit einer Mittelspannung versorgt werden. Die Steuerungseinheit ist in dem Dokument nicht näher dargestellt. Insbesondere ist nicht offenbart, wie die Steuereinheit auf die steuerbaren Schalter der Basisversorgungseinheit oder auf die Mittelspannungsversorgungseinheit einwirkt.

Auch aus der DE 20 2009 003 325 U1 ist eine Stromversorgungsanordnung bekannt, die eine Basisversorgungseinheit und eine Mittelspannungsversorgungseinheit aufweist, wobei die Basisversorgungseinheit nicht im Detail dargestellt ist. Eine Steuereinheit ist in diesem Dokument zwar erwähnt, aber nicht näher beschrieben.

Der weitere Nachteil einer solchen Stromversorgungsanordnung aber auch anderer Stromversorgungsanordnungen ist, dass diese individuell und auftragsbezogen konstruiert werden. Jede Stromversorgung ist also eine individuelle Lösung eines besonderen Stromversorgungsproblems, bei der man zwar auf die Erfahrungen von früheren Lösungen zurückgreifen kann.

Hier setzt die Erfindung an.

Der Erfindung liegt die Aufgabe zugrunde, eine Stromversorgungsanordnung der eingangs genannten Art so zu verbessern, dass ausgehend von einer einfachen Stromversorgungsanordnung mit einer Steuerungseinheit und einer Basisversorgungseinheit flexible Anpassungen der Stromversorgungsanordnungen möglich sind, ohne dass eine Neukonstruktion einer individuellen Lösung notwendig ist.

Die Aufgabe wird erfindungsgemäß dadurch gelöst, dass die Steuerungseinheit ein Steuerungsmodul und die Basisversorgungseinheit ein Basisversorgungsmodul ist, dass das Steuerungsmodul einen Eingang zur Verbindung mit dem Versorgungsnetz zur Versorgung des Steuerungsmoduls mit elektrischer Energie aufweist, dass die Stromversorgungsanordnung einen Kommunikationsbus aufweist und dass sowohl das Steuerungsmodul als auch das Basisversorgungsmodul eine Schnittstelle aufweisen, über die sie mit dem Kommunikationsbus verbunden sind.

Eine derartige erfindungsgemäße, modular aufgebaute Stromversorgungseinrichtung ist ausgehend von einer Anordnung mit einem Steuerungsmodul und einem Basisversorgungsmodul flexibel erweiterbar. Die Erweiterungen können beispielsweise in weiteren Basisversorgungsmodulen bestehen die ggf. nachträglich einer Stromversorgungsanordnung hinzugefügt werden. Es können aber auch Module anderer Typen der Stromversorgungsanordnung hinzugefügt werden. Die hinzuzufügenden Module werden über Schnittstellen und den Kommunikationsbus mit dem Steuerungsmodul verbunden, damit sie vom Steuerungsmodul gesteuert oder geregelt werden. Außerdem weisen sie eigene Eingänge zur Verbindung mit dem Versorgungsnetz auf. Damit ist die erfindungsgemäße Stromversorgungsanordnung einfach skalierbar. Für die Praxis der Herstellung von Polysilicium mit dem Siemens-Verfahren heißt dies, dass die erfindungsgemäße Stromversorgungsanlage durch Anpassung beispielsweise der Anzahl der Basisversorgungsmodule an die Anzahl der mit Strom zu versorgenden Silizium-Dünnstäbe vorgenommen werden kann. Auch können einer Stromversorgungsanordnung zur Versorgung eines Polysiliciumreaktors nach dem Siemensverfahren Module für eine verbesserte Prozessführung ggf. nachträglich hinzugefügt werden. Ein Hersteller von Stromversorgungsherstellern oder ein Polysilicium kann dadurch eine Anlage mit Siemensreaktoren flexibel an sich ändernde Bedingungen, wie zum Beispiel Rohstoff- , Energie- oder Polysiliciumpreisen oder der Nachfrage anpassen.

Die Stromversorgungsanordnung kann einen Transformator mit mehreren sekundärseitigen Anzapfungen aufweisen, wobei jede Anzapfung des Basismoduls eine Gruppe der steuerbaren Schalter einem Eingang des Basisversorgungsmoduls zugeordnet ist und einem Eingang zugeordnet sein kann, um die über diese Anzapfung aus dem Versorgungsnetz entnehmbare elektrische Energie einzustellen. Die steuerbaren Schalter können zum Beispiel Thyristoren sein. Die Gruppen der steuerbaren Schalter können vorteilhaft ohne Zwischenschaltung weiterer Schalter einerseits mit den Anzapfungen und andererseits mit dem Ausgang des Basisversorgungsmoduls verbunden sein. Es ist von besonderem Vorteil, wenn außer den steuerbaren Schaltern der genannten Gruppe im Strompfad zwischen der Anzapfung und dem Ausgang kein Schalter, insbesondere kein mechanischer, sicher trennender Hochstromschalter wie zum Beispiel ein Schutz zu finden sind.

Zwischen den Gruppen der steuerbaren Schalter und dem Ausgang kann allerdings ein Knoten vorgesehen sein. Der Knoten kann über einen weiteren steuerbaren Schalter mit einem Bezugspotential verbunden werden. Damit ist es möglich den Ausgang des Basisversorgungsmoduls zu erden und über Erde kurzzuschließen. Dieses kann gewünscht werden, wenn die an dem Ausgang eines Basisversorgungsmoduls angeschlossenen Lasten anderweitig mit elektrischer Energie versorgt werden. Vorzugsweise weist ein erfindungsgemäßes Basisversorgungsmodul eine Verriegelung auf, die dafür Sorge trägt, dass entweder ein steuerbarer Schalter aus einer der Gruppen der steuerbaren Schalter oder der weitere steuerbare Schalter zur Verbindung mit dem Bezugspotential geschlossen ist. Dadurch kann verhindert werden, dass die am Ausgang eines Basisversorgungsmoduls angeschlossenen Lasten gleichzeitig vom Basisversorgungsmodul und anderweitig mit elektrischer Energie versorgt werden.

Am Ausgang eines Basisversorgungsmoduls können Lasten mit Wechselspannungen von 0 V bis 3000 V, vorteilhaft bis 2500 V und Wechselströme von 0 A bis 5000 A, vorteilhaft bis 4000 A, insbesondere bis 3000 A versorgt werden. Der Transformator kann an seinem Eingang mit einer dreiphasigen Wechselspannung im Mittelspannungsbereich von beispielsweise von 6000 V bis 33000 V versorgt werden. Am Eingang des Basisversorgungsmoduls kann eine einphasige Wechselspannung von 0 bis 3000 V, vorzugsweise von 2500 V anliegen.

Ein Basisversorgungsmodul kann ein Mittel zur Erdschlusserkennung aufweisen.

Eine erfindungsgemäße modulare Stromversorgungsanordnung kann mehrere gleiche oder gleichartige Basisversorgungsmodule aufweisen.

Als Modul eines anderen Typs kann eine erfindungsgemäße modulare Stromversorgungsanordnung ein Mittelspannungsversorgungsmodul aufweisen, dass wenigstens einen Eingang zur Verbindung mit einem Netz oder mit dem Transformator zur Versorgung mit elektrischer Energie und Ausgänge zur Verbindung mit jeweils einer Last aus der Gruppe von Lasten aufweist, die mit aus dem Versorgungsnetz entnommener elektrischer Energie versorgbar sind, und eine Schnittstelle aufweist, über die sie mit dem Kommunikationsbus verbunden ist.

Während das Basisversorgungsmodul am Ausgang der Stromversorgungsanordnung zur Versorgung der daran anschließbaren Lasten vorzugsweise eine Spannung von 0 V bis 3000 v, vorzugsweise bis 2500 V zur Verfügung stellt, können mit einem

Mittelspannungsversorgungsmodul höhere Spannungen zur Verfügung gestellt werden. An den Ausgängen des Mittelspannungsversorgungsmoduls können zum Beispiel Wechselspannungen von 0 V bis 12000 V, insbesondere bis 8000 V und Wechselströme von 0 A bis 50 A, vorzugsweise bis 20 A bereitgestellt werden.

Ein Mittelspannungsversorgungsmodul einer erfindungsgemäßen Stromversorgungsanordnung kann an seinem Eingang dreiphasig mit einer Wechselspannung von 400 V aus dem Versorgungsnetz oder einer Anzapfung eines Transformators versorgt werden. Es kann wenigstens einen Umrichter zum Erhöhen einer am Eingang anlegbaren Spannung aufweisen. Jedem Ausgang des Mittelspannungsversorgungsmoduls kann ein Umrichter zugeordnet sein.

Zumindest bei einer Versorgung der an den Ausgängen des Mittelspannungsversorgungsmoduls angeschlossenen Lasten kann die verkettete Spannung über den Ausgängen gleich 0 V sein. Den Ausgängen des Mittelspannungsversorgungsmoduls können jeweils zwei Anschlüsse zugeordnet sein, wobei bis auf zwei äußere Anschlüsse alle anderen, inneren Anschlüsse zwei Ausgängen zugeordnet sind. Die äußeren Anschlüsse des Mittelspannungsversorgungsmoduls sind mit jeweils einem Anschluss des Ausgangs des Basisversorgungsmoduls verbunden. Damit ist es möglich die Lasten zugleich in Reihe geschaltet an den Ausgang eines Basisversorgungsmoduls anzulegen, ohne dass dadurch in den Ausgang des Basisversorgungsmoduls ein Strom aus dem Mittelspannungsversorgungsmodul hineinfließen kann.

Die modulare Stromversorgungsanordnung kann mehrere gleiche oder gleichartige Mittelspannungsversorgungsmodule aufweisen. Gleichartig bedeutet, dass sich die Mittelspannungsmodule zwar unterscheiden können, aber zumindest die Schnittstellen zum Kommunikationsbus gleich sind und jedes Mittelspannungsversorgungsmodul einen eigenen Netzanschluss aufweist.

Die Anzahl der Mittelspannungsversorgungsmodule entspricht vorzugsweise der Anzahl der Basisversorgungsmodule. Die Mittelspannungsversorgungsmodule und die Basisversorgungsmodule können dann paarweise je einer Gruppe von Lasten zugeordnet sein.

Eine erfindungsgemäße modulare Stromversorgungsanordnung kann ein Mittelfrequenzversorgungsmodul aufweisen, dass wenigstens einen Eingang zur Verbindung mit einem Netz oder dem Transformator zur Versorgung mit elektrischer Energie und Ausgänge zur Verbindung mit jeweils einer Last aus der Gruppe von Lasten aufweist, die mit aus dem Versorgungsnetz entnommener elektrischer Energie versorgt werden können, und das eine Schnittstelle aufweist, über die sie mit dem Kommunikationsbus verbunden ist.

An den Ausgängen des Mittelfrequenzversorgungsmoduls können Wechselspannungen von 0 V bis 100 V, vorzugsweise bis 50 V und Wechselströme von 0 A bis 1500 A bei einer Frequenz von 2 kHz bis 250 kHz, vorzugsweise von 20 kHz bis 150kHz bereitgestellt werden.

Das Mittelfrequenzversorgungsmodul einer modularen Stromversorgungsanordnung kann einen oder mehrere Frequenzumrichter aufweisen, um die Frequenz einer am Eingang anlegbaren Spannung des Versorgungsnetzes zu ändern, insbesondere zu erhöhen.

Jedem Ausgang eines der Frequenzumrichter kann ein Ausgang des Mittelfrequenzversorgungsmoduls zugeordnet sein. Zumindest bei einer Versorgung der an den Ausgängen des Mittelfrequenzversorgungsmoduls angeschlossenen Lasten kann die verkettete Spannung über einem Paar von Ausgängen des Mittelfrequenzversorgungsmoduls gleich 0 V sein.

Den Ausgängen des Mittelfrequenzversorgungsmoduls können jeweils zwei Anschlüsse zugeordnet sein und jedes Paar von Ausgängen kann zwei äußere Anschlüsse und einen inneren Anschluss aufweisen, wobei die äußeren Anschlüsse jeweils einem der beiden Ausgänge des Paares von Ausgängen zugeordnet sind und der innere Anschluss zwei Ausgängen des Paares von Ausgängen zugeordnet ist.

Das Mittelfrequenzversorgungsmodul wird an seinem Eingang vorzugsweise dreiphasig mit einer Wechselspannung von 200 V bis 690 V, vorzugsweise von 400 V zwischen zwei Außenleitern aus einem Versorgungsnetz oder aus dem Transformator versorgt.

Die modulare Stromversorgungsanordnung kann mehrere gleiche oder gleichartige Mittelfrequenzversorgungsmodule aufweisen. Die gleichartigen Mittelfrequenzversorgungsmodule weisen dabei zumindest gleiche Schnittstellen zur Verbindung mit dem Kommunikationsbus auf wie die anderen Mittelfrequenzen und eigene Netzanschlüsse auf. Die Anzahl der Mittelfrequenzversorgungsmodule kann der Anzahl der Basisversorgungsmodule entsprechen.

Vorteilhaft sind bei einer erfindungsgemäßen modularen Stromversorgungsanordnung das Steuerungsmodul, jedes Basisversorgungsmodul und ggf. jedes Mittelfrequenzversorgungsmodul in je einem Schaltschrank angeordnet. Jedes Mittelspannungsversorgungsmodul kann zusammen mit einem Basisversorgungsmodul in einem Schaltschrank angeordnet sein. Jeder Schaltschrank weist vorteilhaft einen Netzanschluss auf. Jedes Modul kann einen Netzanschluss zur Hilfsstromversorgung aufweisen. Jeder Schaltschrank kann eine Anzeigeeinheit, insbesondere einen Bildschirm aufweisen.

Jedes Modul außer dem Steuerungsmodul kann eine dezentrale Steuereinheit aufweisen, die zum Beispiel mit Messgrößen-Aufnehmern, Steueranschlüssen von steuerbaren Schaltelementen, zum Beispiel Thyristoren oder ähnlichem innerhalb des Moduls verbunden sind. Die dezentralen Steuereinheiten können über die Schnittstellen der Module mit dem Kommunikationsbus verbunden sein. Die dezentralen Steuereinheiten können dem Steuerungsmodul nachgeordnet sein.

Die erfindungsgemäße Stromversorgungsanordnung ist vorzugsweise zur Versorgung einer geraden Anzahl von Lasten geeignet und eingerichtet und weist daher vorzugsweise eine gerade Anzahl von Ausgängen auf.

Ein Beispiel für eine erfindungsgemäße modulare Stromversorgungsanordnung ist anhand der Figuren näher beschrieben.
- Fig. 1a, b: zeigt ein vereinfachtes Schaltbild der erfindungsgemäßen modularen Stromversorgungsanordnung,

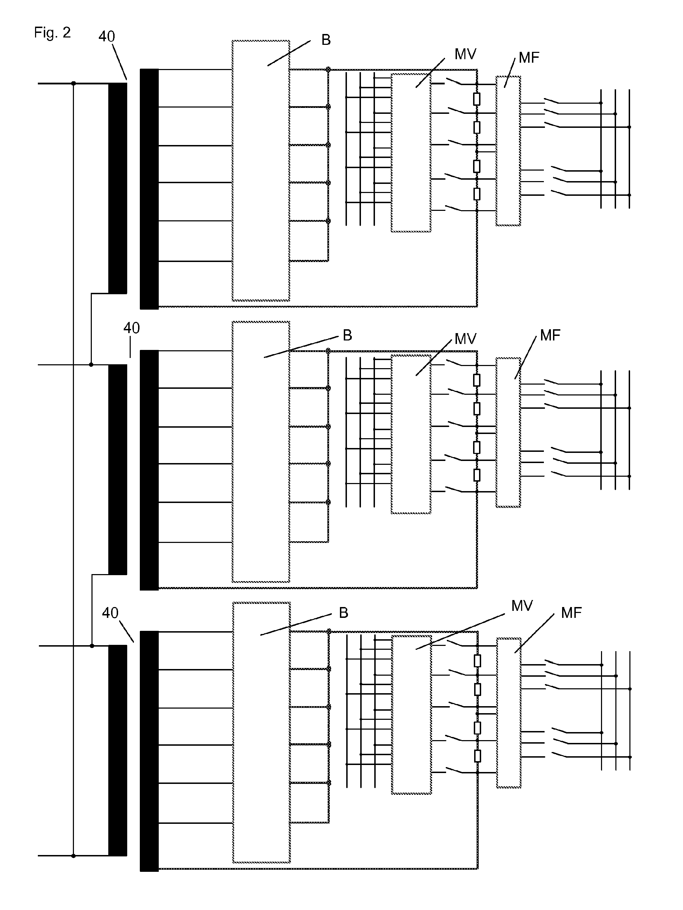

- Fig. 2: zeigt ein vereinfachtes Schaltbild einer modularen Stromversorgungsanordnung mit drei Basisversorgungsmodulen,

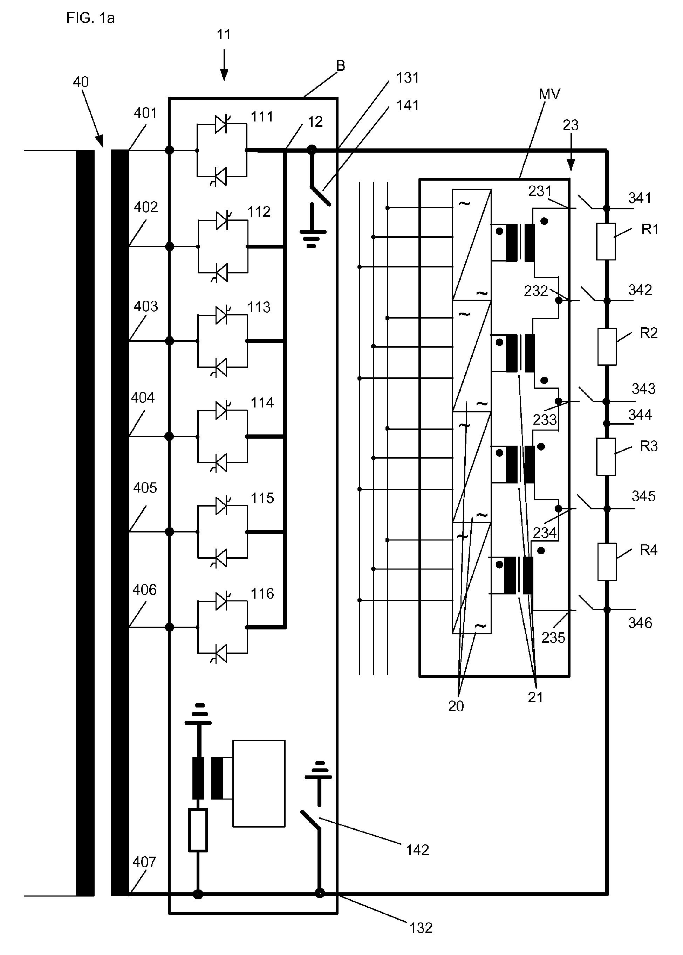

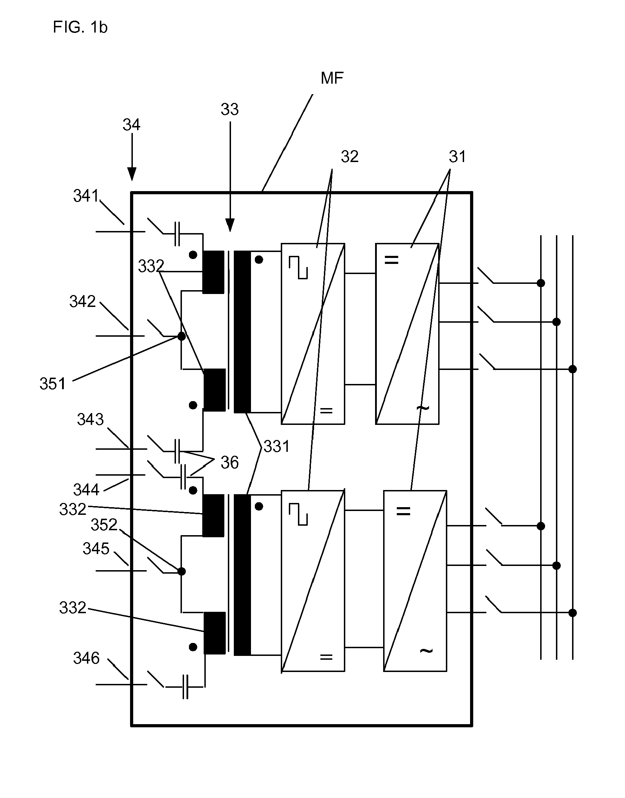

In der Figur 1 sind die Leistungspfade der erfindungsgemäßen modularen Stromversorgungsanordnung sowie ein Transformator 40, ein Basisversorgungsmodul B, ein Mittelspannungsversorgungsmodul MV und ein Mittelfrequenzversorgungsmodul MF dargestellt. Ein Steuerungsmodul und ein Kommunikationsbus sind nicht dargestellt, ebenso wenig wie Steuerleitungen, Messwertaufnehmer und Messwertleitungen innerhalb des Basisversorgungsmoduls B, des Mittelspannungsversorgungsmoduls MV und des Mittelfrequenzversorgungsmoduls MF oder Schnittstellen und Schnittstellentreiberschaltungen der Module B, MV, MF zum Kommunikationsbus. Ebenfalls sind unter Umständen im Basisversorgungsmodul B, Mittelspannungsversorgungsmodul MV und/oder Mittelfrequenzversorgungsmodul MF vorhandene, dem Steuerungsmodul nachgeordnete Steuereinheiten und/oder Treiber- bzw. Zündschaltungen nicht dargestellt.

Das Basisversorgungsmodul B der modularen Stromversorgungsanordnung nach Figur 1 umfasst einen Netzanschluss, der mit einer Primärseite eines Transformators 40 verbunden ist. Die Sekundärseite des Transformators 40 weist eine Vielzahl von ersten Anzapfungen 401 bis 406 auf. Jede der ersten Anzapfungen 401 bis 406 ist im Basisversorgungsmodul B über zwei antiparallel geschaltete Thyristoren 11 oder einem Triac mit einem Knoten 12 verbunden. Der Knoten 12 ist einerseits mit einem ersten Anschluss 131 eines Ausgangs des Basisversorgungsmoduls B verbunden. Der Knoten 12 ist ferner über einen steuerbaren Schalter 141 mit der Masse verbindbar. Eine zweite Anzapfung 407 der Sekundärseite des Transformators 40 ist mit einem Anschluss 132 des Ausgangs des Basisversorgungsmoduls B verbunden und zugleich über einen steuerbaren Schalter 142 mit der Masse verbindbar.

Zwischen der ersten Anzapfung 401 und der zweiten Anzapfung 407 der Sekundärseite des Transformators 10 fällt die größtmögliche Spannung ab. Da die anderen ersten Anzapfungen 402 bis 406 zwischen diesen beiden Anzapfungen 401 und 407 liegen, ist die zwischen einer dieser ersten Anzapfungen 402 bis 4106 und der zweiten Anzapfung 407 abfallende Spannung kleiner als die größtmögliche Spannung. Je nach dem welcher der Thyristorzweige 111 bis 116 durchgeschaltet ist, wird also am Knoten 12 und somit am Anschluss 131 eine höhere oder niedrigere Spannung bereitgestellt, vorausgesetzt, dass der Schalter 141 geöffnet ist. Durch das Einstellen der Zündwinkel der Thyristoren oder der Phasenanschnittwinkel kann die Spannung zwischen der größtmöglichen Spannung zwischen der ersten Anzapfung 401 und der zweiten Anzapfung 407 und der kleinsten Spannung zwischen der ersten Anzapfung 406 und der zweiten Anzapfung 407 stufenlos eingestellt werden.

Ein solches Basisversorgungsmodul B stellt die Regelversorgung oder Grundlastversorgung der in Reihe zwischen den Anschlüssen 131 und 132 an das Basisversorgungsmodul B angeschlossenen Siliziumstäbe bzw. Siliziumdünnstäbe R1 bis R4 sicher.

Durch das Mittelspannungsversorgungsmodul MV und das Mittelfrequenzversorgungsmodul MF kann die Leistung eines Siemens-Reaktors verbessert werden. Daher können das Mittelspannungsversorgungsmodul MV und das Mittelfrequenzversorgungsmodul MF zusätzlich in der modularen Schaltungsanordnungen vorgesehen sein.

Die durch das Basisversorgungsmodul B mit Strom versorgten Siliziumstäbe bzw. Siliziumdünnstäbe R 1 bis R 4 sind im kalten Zustand, d.h. auch bei Raumtemperatur, Isolatoren. Erst durch Erhitzen werden die Siliziumsstäbe bzw. Siliziumdünnstäbe R 1 bis R 4 leitfähig. Das Mittelspannungsversorgungsmodul MV kann dazu benutzt werden, um zum Beginn des Abscheideprozesses die Siliziumdünnstäbe oder Siliziumstäbe R1 bis R4 zu erhitzen, so dass diese leitfähig werden und mit einem Strom aus dem Basisversorgungsmodul B versorgt werden können (dielektrische Erwärmung). Das Mittelspannungsversorgungsmodul MV stellt dazu gegenüber dem Basisversorgungsmodul B höhere Spannungen an seinen Ausgängen zur Verfügung. An jedem der Ausgänge ist einer der Siliziumsstäbe bzw. Siliziumdünnstäbe R 1, R 2, R 3, R 4 angeschlossen. Vorzugsweise hat die an den Ausgängen zur Verfügung gestellte Mittelspannung auch eine gegenüber der Netzfrequenz erhöhte Frequenz von beispielsweise 5 kHz.

Dass in der Figur 1 dargestellte Mittelspannungsversorgungsmodul MV weist insgesamt drei Umrichter 20 auf, mit denen aus einer dreiphasigen Netzspannung eine Spannung mit höherer Frequenz erzeugt werden kann. Diese Spannung wird dann über Transformatoren 21 hoch transformiert auf eine Spannung von beispielsweise bis zu 12 kV. Diese im Vergleich zur Netzspannung höhere frequente Mittelspannung wird dann an den Ausgängen des Mittelspannungsversorgungsmoduls MV bereitgestellt. An jeden Ausgang ist einer der Siliziumsstäbe bzw. Siliziumdünnstäbe R 1 , R 2, R 3, R 4 angeschlossen.

Die Ausgänge 23 des Mittelspannungsversorgungsmoduls MV sind miteinander verkettet. Für die dargestellten vier Ausgänge sind daher nur fünf Anschlüsse 231 bis 235 vorgesehen. Von diesen fünf Anschlüssen werden die Anschlüsse 232, 233 und 234 für jeweils zwei in der Kette hintereinander liegenden Ausgänge verwendet, während die Anschlüsse 231 und 235 für einen Ausgang am Anfang bzw. am Ende der Kette der Ausgänge verwendet werden.

Die Spannungen an den Ausgängen des Mittelspannungsversorgungsmoduls MV sind so eingestellt, dass die über die gesamte Kette der Ausgänge 23 abfallende Spannung gleich 0 V ist. Zwischen den Anschlüssen 231 und 235 fällt somit im Betrieb des Mittelspannungsversorgungsmoduls MV keine Spannung ab. Da diese Anschlüsse 231 und 235 zugleich an dem Ende der Reihenschaltung aus den Siliziumstäben bzw. Siliziumdünnstäben mit R 1 bis R 4 liegen, und diese Reihenschaltung an den Ausgang des Basisversorgungsmoduls B angeschlossen ist, liegt an dem Ausgang des Basisversorgungsmoduls B während des Betriebs des Mittelspannungsversorgungsmoduls MV auch keine von dem Mittelspannungsversorgungsmodul MV bereitgestellte Spannung an.

Das Mittelfrequenzversorgungsmodul MF dient im Gegensatz zum Mittelspannungsversorgungsmodul MV dazu gleichzeitig zu dem Basisversorgungsmodul B einen Strom in die Siliziumsstäbe bzw. Siliziumdünnstäbe R 1, R 2, R 3, R 4 einzuspeisen. Das Mittelfrequenzversorgungsmodul MF stellt dazu an seinen Ausgängen 34 eine gegenüber der Netzspannung bzw. der Ausgangspannung des Basisversorgungsmoduls B hochfrequente Spannung zur Verfügung. Das Mittelfrequenzversorgungsmodul MF weist zwei dreiphasige Netzanschlüsse auf. Diese Netzanschlüsse sind innerhalb des Mittelfrequenzversorgungsmoduls MF mit je einem Frequenzumrichter verbunden. Jeder Frequenzumrichter weist zwei Stufen 31, 32 auf. Die ersten Stufen 31 wandeln die Netzspannungen in je eine Gleichspannung um. Mit den zweiten Stufen 32 der Frequenzumrichter werden die Gleichspannungen in die höherfrequente Wechselspannungen umgewandelt. Diese hochfrequente Wechselspannungen werden in die Primärseite 331 je eines Transformators 33 eingespeist. Der magnetische Fluss in jedem der Transformatoren 33 durchsetzt sekundärseitig zwei Spulen 332. Die Sekundärspulen 332 jedes der beiden Transformatoren 33 sind identisch. Jede Sekundärspule 332 liegt parallel zu einem Ausgang 34 des Mittelfrequenzversorgungsmoduls MF. An jeden der Ausgänge 34 ist einer der Siliziumsstäbe bzw. Siliziumdünnstäbe R 1 , R 2, R 3, R 4 angeschlossen. Jeweils zwei Ausgänge 34 sind miteinander verkettet. Es handelt sich dabei jeweils um die Ausgänge 34, die über den gleichen Transformator 33 mit Spannung versorgt werden. D.h., dass zwei Anzapfungen der Sekundärspule 332 jeweils mit einem Anschluss 341,343 bzw. 344, 346 verbunden sind. Die anderen beiden Anzapfungen der Sekundärspule 332 sind jeweils mit einem Knoten 351 bzw. 352 verbunden. Von diesen Knoten 351, 352 sind dann Verbindungen zu den Anschlüssen 343 und 345 geführt. Die Sekundärspule 332 jedes Transformators 32 kann auch durch eine sekundärseitige Spule ersetzt werden, die eine Mittelanzapfung hat, die exakt in der Mitte der sekundärseitigen Spule des Transformators liegt.

Über den Sekundärspulen 332 jedes Transformators 32 fallen betragsmäßig die gleichen Spannungen ab. Durch umgekehrte Wicklungssinne der beiden Sekundärspulen 332 jedes Transformators 32 sind die Spannungen allerdings entgegengerichtet. Die Verkettung der einem Transformator 32 zugeordneten Ausgänge 34 führt dann dazu, dass zwischen den Anschlüssen 341 und 343 bzw. 344 und 346 keine Spannung abfällt. Da auch die Anschlüsse 343, 344 zumindest über eine Leitungsverbindung zwischen den Siliziumstäben bzw. Siliziumdünnstäben R 2 und R 3 miteinander verbunden sind, fällt auch zwischen den Anschlüssen 341 und 346 der Ausgänge 34 des Mittelfrequenzversorgungsmoduls MF keine Spannung ab. Von dem Mittelfrequenzmodul F wird also während des parallelen Betriebes mit dem Basisversorgungsmodul B kein Strom in das Basisversorgungsmodul B eingespeist, obwohl die Anschlüsse 341 und 346 mit den Anschlüssen 131 bzw. 132 des Beweisversorgungsmoduls verbunden sind.

Allerdings könnte noch von dem Basisversorgungsmodul B ein Strom in das Mittelfrequenzversorgungsmodul MF eingespeist werden. Um dies zu verhindern, ist zwischen den Spulen auf der Sekundärseite der Transformatoren 32 und den Anschlüssen 341 , 343, 344 und 346 ein Kondensator 36 angeordnet, der den niederfrequenten Strom, der von dem Basisversorgungsmodul zur Verfügung gestellt wird, filtert, d. h. nicht hindurch lässt. Somit ist auch das Mittelfrequenzversorgungsmodul MF von dem Basisversorgungsmodul B entkoppelt.

Die drei dargestellten Module B, MV, MF sind so ausgestaltet, dass sie unabhängig voneinander betrieben werden können und dass das eine Modul nicht Voraussetzung für das andere Modul ist. Alle Module weisen eigene Netzanschlüsse auf.

Neben der in den in der Figur dargestellten Netzanschlüssen für die Leistungsversorgung sind auch die Hilfsstromversorgungen getrennt voneinander. Auch die Verbindungen über die Schnittstelle und einen Kommunikationsbus (nicht dargestellt) zu dem nicht dargestellten Steuerungsmodul sind unabhängig voneinander.

## Patentansprüche

1. Stromversorgungsanordnung, insbesondere für Reaktoren zur Herstellung von Polysilicium mit einer zentralen Steuerungseinheit und wenigstens einer Basisversorgungseinheit, wobei
- die Steuerungseinheit wenigstens ein Regel- und Steuermittel zum Regeln und/oder Steuern der Basisversorgungseinheit aufweist,
- die Basisversorgungseinheit
- wenigstens einen Eingang zur Versorgung des Basisversorgungsmoduls mit elektrischer Energie,
- wenigstens einen Ausgang zur Verbindung mit einer Gruppe von Lasten, die über die Basisversorgungseinheit mit aus dem Versorgungsnetz entnommener elektrischer Energie versorgbar sind, und
- steuerbare Schalter, vorzugsweise Thyristoren aufweist, die zumindest mittelbar mit dem Eingang und zumindest mittelbar mit dem Ausgang verbunden sind und mit denen die über den Ausgang den Lasten zuführbare Energie einstellbar ist, wobei die Schalter durch die Steuerungseinheit steuerbar sind,
**dadurch gekennzeichnet, dass**
die Steuerungseinheit ein Steuerungsmodul und die Basisversorgungseinheit ein Basisversorgungsmodul ist,
das Steuerungsmodul einen Eingang zur Verbindung mit dem Versorgungsnetz zur Versorgung des Steuerungsmoduls mit elektrischer Energie aufweist,
die Stromsversorgungsanordnung einen Kommunikationsbus aufweist und
dass sowohl das Steuerungsmodul als auch das Basisversorgungsmodul eine Schnittstelle aufweisen, über die sie mit dem Kommunikationsbus verbunden sind.

2. Modulare Stromversorgungsanordnung nach Anspruch 1 , **dadurch gekennzeichnet, dass** die modulare Stromversorgungsanordnung einen Transformator mit mehreren sekundärseitigen Anzapfungen aufweist.

3. Modulare Stromversorgungsanordnung nach Anspruch 2, **dadurch gekennzeichnet, dass** die Anzapfungen des Transformators je einem Eingang des Basisversorgungsmoduls zugeordnet sind und jedem Eingang des Basisversorgungsmoduls eine Gruppe der steuerbaren Schalter zugeordnet ist, um die über diesen Eingang aufnehmbare elektrische Energie einzustellen.

4. Modulare Stromversorgungsanordnung nach Anspruch 3, **dadurch gekennzeichnet, dass** die Gruppen der steuerbaren Schalter ohne Zwischenschaltung weiterer Schalter, insbesondere mechanischer Schalter wie zum Beispiel Schütze einerseits mit den Eingängen und andererseits mit dem Ausgang des Basismoduls verbunden ist.

5. Modulare Stromversorgungsanordnung nach Anspruch 4, **dadurch gekennzeichnet, dass** zwischen den Gruppen der steuerbaren Schalter und dem Ausgang ein Knoten vorgesehen ist und der Knoten über einen weiteren steuerbaren Schalter mit einem Bezugspotential verbindbar ist.

6. Modulare Stromversorgungsanordnung nach einem der Ansprüche 1 bis 8, **dadurch gekennzeichnet, dass** die modulare Stromversorgungsanordnung mehrere gleiche oder gleichartige Basisversorgungsmodule aufweist.

7. Modulare Stromversorgungsanordnung nach einem der Ansprüche 1 bis 6, **dadurch gekennzeichnet, dass** die modulare Stromversorgungsanordnung ein Mittelspannungsversorgungsmodul aufweist, das wenigstens einen Eingang zur Verbindung mit einem Netz zur Versorgung mit elektrischer Energie oder dem Zuspeisen transformierter Ein- und Ausgänge zur Verbindung mit jeweils einer Last aus der Gruppe von Lasten aufweist, die mit gegebenenfalls über dem Transformator aus dem Versorgungsnetz entnommener elektrischer Energie versorgbar sind, und eine Schnittstelle aufweist, über die sie mit dem Kommunikationsbus verbunden ist.

8. Modulare Stromversorgungsanordnung nach einem der Ansprüche 6 und 7, **dadurch gekennzeichnet, dass** das Mittelspannungsversorgungsmodul wenigstens einen Umrichter zum Erhöhen einer am Eingang anlegbaren Spannung aufweist.

9. Modulare Stromversorgungsanordnung nach Anspruch 7, **dadurch gekennzeichnet, dass** jedem Ausgang des Mittelspannungsversorgungsmoduls ein Umrichter zugeordnet ist.

10. Modulare Stromversorgungsanordnung nach einem der Ansprüche 6 bis 8, **dadurch gekennzeichnet, dass** zumindest bei einer Versorgung der an den Ausgängen des Mittelspannungsversorgungsmoduls angeschlossenen Lasten die verkettete Spannung über den Ausgängen gleich 0 V ist.

11. Modulare Stromversorgungsanordnung nach einem der Ansprüche 1 bis 9, **dadurch gekennzeichnet, dass** die modulare Stromversorgungsanordnung ein Mittelfrequenzversorgungsmodul aufweist, das wenigstens einen Eingang zur Verbindung mit einem Netz zur Versorgung mit elektrischer Energie und Ausgänge zur Verbindung mit jeweils einer Last aus der Gruppe von Lasten aufweist, die mit aus dem Versorgungsnetz entnommener elektrischer Energie versorgbar sind, und eine Schnittstelle aufweist, über die sie mit dem Kommunikationsbus verbunden ist.

12. Modulare Stromversorgungsanordnung nach Anspruch 10, **dadurch gekennzeichnet, dass** das Mittelfrequenzversorgungsmodul einen oder mehrere Frequenzumrichter aufweist, um die Frequenz einer am Eingang anlegbaren Spannung des Versorgungsnetzes zu erhöhen.

13. Modulare Stromversorgungsanordnung nach Anspruch 1 1 , **dadurch gekennzeichnet, dass** jedem Ausgang ein Ausgang eines der Frequenzumrichter zugeordnet ist.

14. Modulare Stromversorgungsanordnung nach einem der Ansprüche 10 bis 12, **dadurch gekennzeichnet, dass** zumindest bei einer Versorgung der an den Ausgängen des Mittelfrequenzversorgungsmoduls angeschlossenen Lasten die verkettete Spannung über ein Paar von Ausgängen des Mittelfrequenzversorgungsmoduls gleich 0 V ist.

15. Modulare Stromversorgungsanordnung nach einem der Ansprüche 10 bis 14, **dadurch gekennzeichnet, dass** den Ausgängen des Mittelfrequenzversorgungsmoduls jeweils zwei Anschlüsse zugeordnet sind und dass jedes Paar von Ausgängen zwei äußere Anschlüsse und einen inneren Anschluss aufweist, wobei die äußeren Anschlüsse jeweils einem der beiden Ausgänge des Paares von Ausgängen zugeordnet sind und der innere Anschluss zwei Ausgängen des Paares von Ausgängen zugeordnet ist.

16. Modulare Stromversorgungsanordnung nach einem der Ansprüche 10 bis 15, **dadurch gekennzeichnet, dass** das Mittelfrequenzversorgungsmodul an seinem Eingang dreiphasig mit einer Wechselspannung von 200 V bis 600 V, vorzugsweise von 400 V, zum Beispiel aus dem Transformator versorgbar ist.

17. Modulare Stromversorgungsanordnung nach einem der Ansprüche 10 bis 16, **dadurch gekennzeichnet, dass** die modulare Stromversorgungsanordnung mehrere gleiche oder gleichartige Mittelfrequenzversorgungsmodule aufweist.

18. Modulare Stromversorgungsanordnung nach einem der Ansprüche 10 bis 17, **dadurch gekennzeichnet, dass** die Anzahl der Mittelfrequenzversorgungsmodule der Anzahl der Basisversorgungsmodule entspricht.

19. Modulare Stromversorgungsanordnung nach einem der Ansprüche 1 bis 18, **dadurch gekennzeichnet, dass** die Stromversorgungsanordnung Schaltschränke aufweist und das Steuerungsmodul, jedes Basisversorgungsmodul und ggf. jedes Mittelfrequenzversorgungsmodul in je einem Schaltschank angeordnet sind.

20. Modulare Stromversorgungsanordnung nach Anspruch 19, **dadurch gekennzeichnet, dass** jedes Mittelspannungsversorgungsmodul zusammen mit einem Basisversorgungsmodul in einem Schaltschrank angeordnet ist.

21. Modulare Stromversorgungsanordnung nach Anspruch 19 oder 20, **dadurch gekennzeichnet, dass** jeder Schaltschrank einen Netzanschluss aufweist.

22. Modulare Stromversorgungsanordnung nach einem der Ansprüche 1 bis 21, **dadurch gekennzeichnet, dass** jedes Modul einen Netzanschluss zur Hilfsstromversorgung aufweist.

23. Modulare Stromversorgungsanordnung nach einem der Ansprüche 19 bis 21, **dadurch gekennzeichnet, dass** jeder Schaltschrank eine Anzeigeeinheit, insbesondere einen Bildschirm aufweist.
